# FASCICULE DE BREVET EUROPEEN

(11) **EP 4 060 840 B1**
(45) Date de publication et mention de la délivrance du brevet: **08.01.2025**
(21) Numéro de dépôt: 22162758.1
(22) Date de dépôt: 17.03.2022
(51) Int. Cl.: H02G 3/20, F21S 8/02, F21V 21/04, H02G 3/12

(54) **APPAREIL ÉLECTRIQUE ENCASTRABLE**
ELEKTRISCHES EINBAUGERÄT
EMBEDDABLE ELECTRICAL APPLIANCE

(30) Priorité: 19.03.2021 FR 2102764
(43) Date de publication de la demande: 21.09.2022
(73) Titulaire: HAGER CONTROLS, 67700 Saverne (FR)
(72) Inventeur: MUNSCH, Philippe, 67700 Monswiller (FR)
(74) Mandataire: Cabinet Nuss

(56) Documents cités:
- EP-A1- 1 936 265
- WO-A1-2016/007018
- AU-A4- 2011 100 986
- US-A1- 2020 149 721

## Description

La présente invention concerne le domaine des appareils électriques encastrables aptes et destinés à être encastrés dans une paroi telle qu'une paroi d'habillage ou de faux-plafond ou tout autre paroi analogue et a pour objet un appareil électrique encastrable.

On connait déjà des appareils électriques encastrables tels que des détecteurs de fumée ou de présence ou de mouvement, des luminaires, également connus sous le nom de spots, ou encore des enceintes acoustiques, destinés à être encastrés et maintenus par pression au travers d'une paroi du type paroi d'habillage ou paroi de faux plafond ou autre paroi analogue.

Une telle paroi présente deux faces opposées, à savoir une face externe et une face interne, traversées par au moins un trou ménagé aux dimensions de l'appareil électrique à encastrer dans ledit trou.

Ces appareils électriques encastrables comprennent un corps principal, généralement de forme cylindrique ou tronconique, s'étendant le long d'un axe longitudinal et étant munis d'une face d'appui s'étendant latéralement à l'extérieur du corps principal de sorte à pouvoir venir en appui contre la face externe de la paroi à l'état encastré de l'appareil. Ils comprennent en outre deux ressorts hélicoïdaux de torsion disposés de manière diamétralement opposée de part et d'autre dudit axe longitudinal.

Une partie de chaque ressort forme une patte de serrage s'étendant à l'extérieur du corps principal et une autre partie du ressort forme un enroulement hélicoïdal constituant la partie active du ressort. L'enroulement hélicoïdal de chaque ressort est monté sur un côté externe du corps principal et forme en quelque sorte, outre sa fonction active du ressort, une articulation permettant le pivotement de la patte de serrage autour de l'axe d'enroulement. Une extrémité libre de l'enroulement du ressort est maintenue fixement dans le côté externe.

Chaque ressort est réalisé à partir d'une tige métallique pliée de sorte à former, notamment, l'enroulement et la patte de serrage s'étendant depuis ce dernier en se terminant par une extrémité libre. La partie de la tige métallique formant la patte de serrage est généralement pliée en forme de U, la base du U formant l'extrémité libre.

Chaque patte de serrage, également appelée bras ou levier de serrage, peut ainsi être déplacée par pivotement autour de l'axe d'enroulement entre une position déployée ou relevée permettant le passage de l'appareil dans le trou de la paroi et une position repliée ou abaissée vers la face d'appui dans laquelle l'extrémité libre de chaque patte de serrage est, à l'état encastré de l'appareil dans ledit trou, en appui, avec pression, sur la face interne de ladite paroi. La partie active de chaque ressort tend à rappeler élastiquement en force chaque patte de serrage vers sa position abaissée ou repliée.

A l'état encastré de l'appareil, la paroi est ainsi prise en étau entre la face d'appui du corps principal s'étendant transversalement à l'extérieur et les extrémités libres des deux pattes de fixation rappelés en position abaissée ou repliée sous la force de rappel de chaque ressort. Les deux pattes de serrage et la pression exercée par leurs extrémités libres sur la face interne de la paroi permet de maintenir l'appareil encastré dans la paroi par serrage sur cette dernière. L'appareil est ainsi maintenu à l'état encastré par serrage de la paroi entre les extrémités libres de ses pattes de serrage et sa face d'appui.

Lors de la mise en place de l'appareil électrique encastrable, l'installateur doit tout d'abord relever ou déployer avec ses doigts les deux pattes de serrage sur les côtés du corps principal afin de permettre l'insertion/l'encastrement de l'appareil dans le trou de la paroi ménagé à cet effet jusqu'à ce que la face d'appui dudit appareil vienne en appui contre la face externe de ladite paroi, puis lorsque les deux pattes de serrage sont passées de l'autre côté de la paroi, c'est-à-dire du côté de sa face interne, celles-ci sont rappelées automatiquement, sous l'effet de la force de rappel exercée par la partie active des ressorts, vers leur position abaissée ou repliée et leurs extrémités libres viennent alors s'appuyer avec pression sur, ou se plaquer brutalement contre, la face interne de la paroi.

Toutefois, ces appareils présentent plusieurs inconvénients ou désagréments, du fait que chaque patte de serrage est réalisée à partir d'un ressort et pivote autour de l'axe d'enroulement dudit ressort :

Tout d'abord, les pattes de serrage sont difficiles à armer, c'est-à-dire à déplacer manuellement vers leur position déployée ou relevée, pour permettre le passage de l'appareil dans le trou de la paroi. En outre, lors du déplacement des pattes de serrage, du fait de la force de retenue importante, celle-ci ci peuvent blesser l'installateur. Des blessures sont notamment fréquentes lors du retrait de l'appareil par un retour brutale desdites pattes de serrage dans leur position abaissée ou repliée et du fait de la structure des pattes de serrage réalisée à partir d'une tige métallique pliée formant le ressort.

En outre, si ces appareils peuvent s'adapter aux différentes épaisseurs des parois, des variations importantes de l'effort de serrage se produisent suivant les différentes épaisseurs de paroi rencontrées. En effet, plus la paroi est épaisse plus l'effort de retenue est important et, inversement, plus la paroi est mince moins la retenue est importante.

D'autre part, certains appareils comportent des moyens de réglages du type potentiomètres permettant de régler, par exemple, la temporisation ou le seuil de déclenchement. Ces potentiomètres sont accessibles sur la face latéral externe du corps principal et nécessitent de sortir légèrement l'appareil du trou de la paroi, et éventuellement de faire une rotation de l'appareil autour de son axe longitudinal, pour permettre à l'utilisateur d'être en regard desdits potentiomètres. Cependant, lors du déplacement de l'appareil, notamment lors de sa rotation, les pattes de serrage peuvent rester accrochées et/ou détériorer la paroi du trou et/ou empêcher la rotation de l'appareil.

Enfin, lors du retrait de l'appareil, il arrive fréquemment que la paroi soit détériorée ou cassée par les pattes de serrage.

Le document US2020/149721A1 concerne un appareil encastrable permettant d'installer un luminaire dans une ouverture de mur ou de plafond. Il comprend un boîtier de luminaire et deux ensembles de retenue présentant chacun une partie s'accouplant avec le luminaire et une autre partie destinée à reposer sur une surface supportant le poids du luminaire telle qu'une surface de plafond. Chaque ensemble de retenue comprend un corps et un ressort sétendant à l'intérieur du corps et étant couplé par son extrémité distale à un élément de couplage du boîtier en forme de saillie.

Le document EP1936265A1 a pour objet un dispositif pour l'installation de luminaires encastrables dans une surface, comprenant au moins un élément de blocage composé d'une première pièce présentant une première extrémité associée à ladite surface et d'une deuxième pièce présentant une deuxième extrémité associée à une structure du luminaire. Les deux pièces peuvent tourner l'une par rapport à l'autre autour d'un arbre fixe, monté sur la structure, sous l'action d'un ressort de torsion défini par une paire de spirale et deux extrémités opposées.

Le document AU2011100986A4 concerne un luminaire encastrable dans un trou de plafond, ledit luminaire comprenant une base annulaire de montage configurée pour être encastrée dans le trou pour monter le luminaire, au moins un élément de cadre relié à ladite base et un élément de sollicitation sous la forme d'un ressort à double hélice relié à l'élément de cadre au moyen d'un axe traversant les deux spires du ressort.

Toutefois, les systèmes divulgués par ces trois documents ne permettent pas de faciliter l'encastrement de l'appareil dans la paroi, tout en réduisant ou supprimant les risques de blessure de l'utilisateur.

La présente invention a pour but de pallier ces inconvénients.

A cet effet, l'appareil électrique encastrable, selon la présente invention, est telle que défini dans la revendication 1.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en coupe longitudinale d'un appareil électrique encastrable selon la présente invention dans un mode de réalisation préférentiel où chaque moyen de rappel est supporté par la patte de serrage associée et dans une première forme de réalisation de chaque moyen de rappel consiste en un ressort hélicoïdal de torsion avec deux enroulements,
[Fig. 2] est une vue de profil de l'appareil électrique encastrable représenté sur la figure 1 à l'état encastré dans un trou ménagé dans une paroi mince vue en coupe, avec les pattes de serrage rappelées en position abaissée ou repliée avec leur extrémité libre en appui sous pression sur la face interne de ladite paroi mince,
[Fig. 3] est une vue de profil de l'appareil électrique encastrable représenté sur la figure 1 à l'état encastré dans un trou ménagé dans une paroi épaisse vue en coupe, avec les pattes de serrage rappelées en position abaissée ou repliée avec leur extrémité libre en appui sous pression sur la face interne de ladite paroi épaisse,
[Fig. 4] est une vue en perspective de dessus de l'appareil électrique encastrable à l'état tel que représenté sur la figure 3,
[Fig. 5] est une vue de profil de l'appareil électrique encastrable représenté sur la figure 1 en phase d'encastrement dans le trou de la paroi représentée sur la figure 3, avec les pattes de serrage en position relevée ou déployée et insérées, par leurs extrémités libres, dans le trou de la paroi,
[Fig. 6] est une vue en perspective de dessus de l'appareil électrique encastrable représenté sur la figure 1,
[Fig. 7] est une vue en perspective de côté de l'appareil électrique encastrable représenté sur la figure 1,
[Fig. 8] est une vue en perspective de l'un des moyens de rappel de l'appareil électrique encastrable représenté sur la figure 1,
[Fig. 9] est une vue en perspective de l'appareil électrique encastrable représenté sur la figure 1, dans une forme de réalisation des ressorts hélicoïdaux de torsion avec un seul enroulement,
[Fig. 10] est une vue en perspective de l'un des moyens de rappel de l'appareil électrique encastrable représenté sur la figure 9,
[Fig. 11] est une vue en perspective de l'une des deux pattes de serrage, représentées sur la figure 1 ou 9, sans le moyen de rappel associé,
[Fig. 12] représente une vue en perspective d'un appareil électrique encastrable de l'art antérieur,
[Fig. 13] représente une vue en perspective de l'un des deux ressorts de l'appareil représenté sur la figure 12.

Les figures annexées 1 à 11 montrent un appareil électrique encastrable, selon la présente invention, configuré pour pouvoir être encastré dans un trou P3 ménagé à travers une paroi P présentant deux faces opposées, une face externe P1 et une face interne P2, ledit appareil comprenant :
- un corps principal 1 s'étendant le long d'un axe longitudinal X1 et étant muni d'une face d'appui 1a externe apte et destinée à venir en appui contre ladite face externe P1 à l'état encastré de l'appareil dans ledit trou P3,
- au moins deux pattes de serrage 2 comportant chacune une extrémité libre 2a et une extrémité de liaison 2b reliée audit corps principal 1 de sorte à permettre le déplacement de chaque patte de serrage 2 à l'extérieur dudit corps principal 1 entre une position relevée ou déployée permettant l'insertion de l'appareil dans ledit trou P3 et une position abaissée ou repliée dans laquelle chaque extrémité libre 2a est apte et destinée à venir en appui avec pression, sous l'effet d'une force de rappel exercée sur lesdites pattes de serrage 2, sur ladite face interne P2 à l'état encastré de l'appareil pour maintenir ce dernier par serrage de la paroi P entre ladite face d'appui 1a et lesdites extrémités libres 2a,
et des moyens de rappel 3 exerçant ladite force de rappel tendant à ramener lesdites pattes de serrage 2 vers leur position abaissée ou repliée.

Les pattes de serrage 2 peuvent être également appelées ou dénommées, par exemple, bras ou leviers de serrage.

Conformément à la présente invention, les moyens de rappel 3 sont distincts des pattes de serrage 2. En outre, chaque patte de serrage 2 est associée à l'un des moyens de rappel 3 et est articulée en pivotement à son extrémité de liaison 2b sur ledit corps principal 2 autour d'un axe de pivotement 2c sensiblement perpendiculaire à l'axe longitudinal X1. Chaque moyen de rappel 3 est relié à la patte de serrage 2 associée et au corps principal 1.

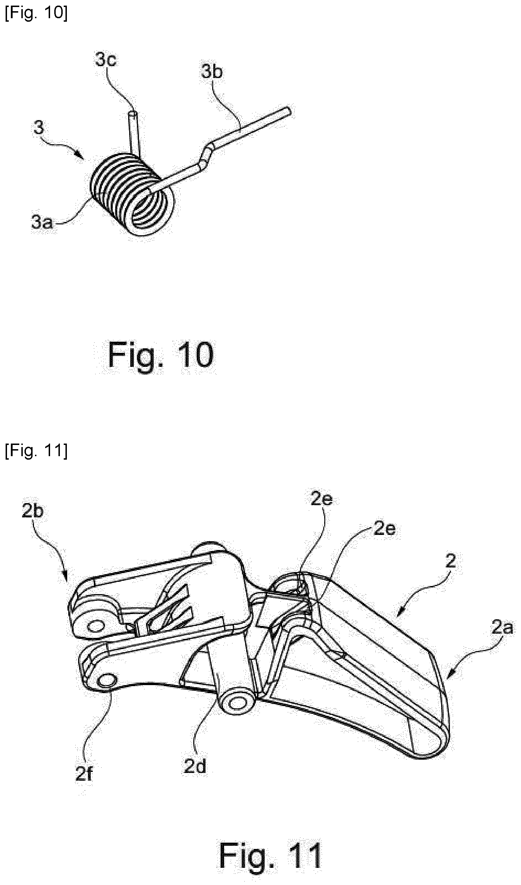

De préférence, l'axe de pivotement 2c est réalisé à partir d'une tige cylindrique fixe, de préférence métallique. Elle est fixée sur le corps principal 1. De préférence le diamètre de la tige est faible, c'est-à-dire le plus petit possible pour limiter les frottements (ou frictions), préférentiellement de l'ordre de 1 mm à 2.5 mm. La patte de serrage 2 est configurée pour tourner autour d'une telle tige 2c et peut comprendre à cet effet, à son extrémité de liaison 2b, une partie formant un moyeu 2f recevant ou traversé par ladite tige 2c (voir notamment la figure 11).

L'axe de pivotement 2c permet de maintenir la patte de serrage 2 sur le corps principal 1.

La face d'appui 1a peut présenter une forme circulaire ou d'anneau. De préférence, la face d'appui 1a est plane. Elle s'étend préférentiellement perpendiculairement à l'axe longitudinal X1.

La paroi P peut être une paroi destinée à être utilisée, notamment, dans un bâtiment ou un édifice. Elle peut être du type paroi d'habillage ou paroi de faux-plafond. Elle peut se présenter sous la forme d'une plaque, d'une cloison ou d'un panneau et être orientée verticalement, horizontalement ou de manière inclinée.

Un appareil électrique encastrable selon la présente invention peut être, selon l'application, du type, par exemple, détecteur de fumée ou de présence ou de mouvement encastrable, luminaire ou spot encastrable, ou encore enceinte acoustique encastrable. Un tel appareil électrique encastrable, selon la présente invention, comprend, selon l'application, des parties techniques fonctionnelles, par exemple, électriques, électroniques, de détection, de connexion électrique, lumineuses ou sonores, qui sont connues et ne sont pas décrites dans la présente invention qui concerne la partie support et maintien de l'appareil. Ces parties techniques fonctionnelles liées à l'application concernée peuvent être contenues dans le corps principal 1 ou s'étendre à l'extérieur de ce dernier.

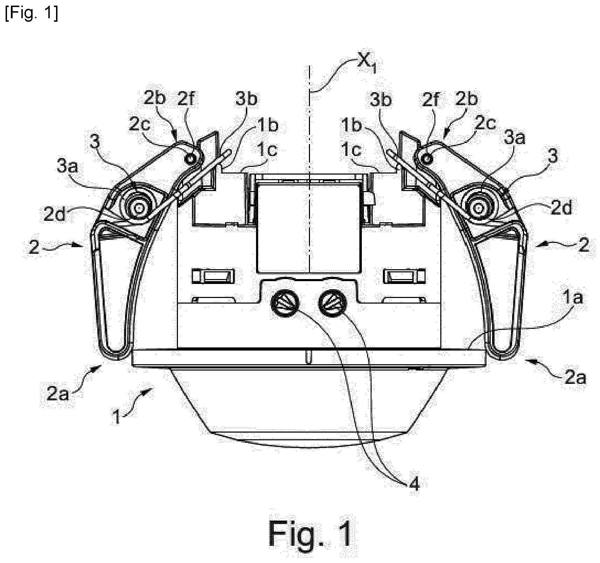

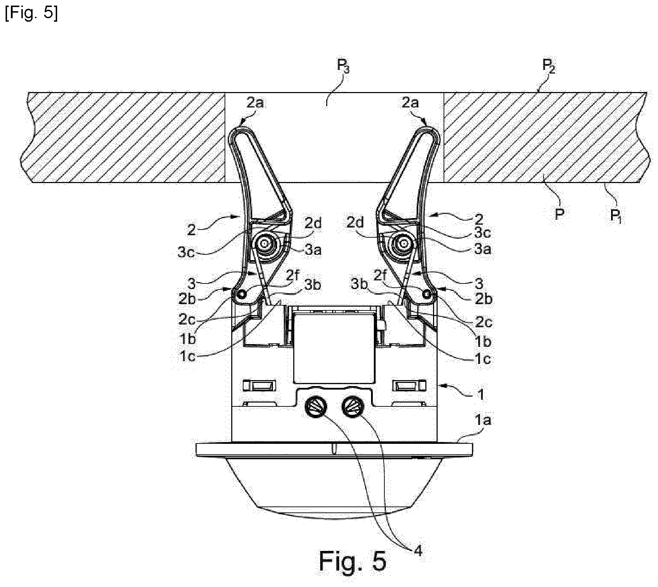

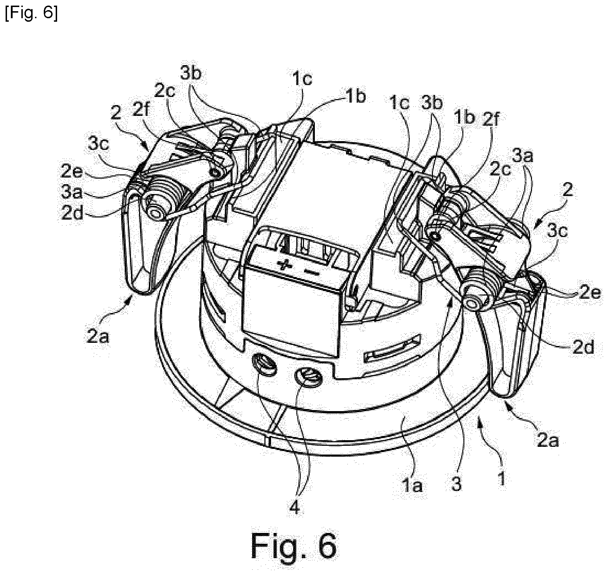

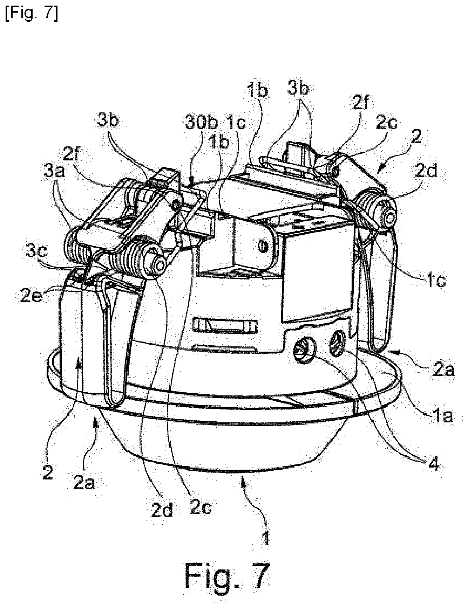

Comme on peut le voir sur les figures 1, 2, 3, 4, 5, 6, 7 et 9, chaque moyen de rappel 3 est supporté par la patte de serrage 2 associée. En outre, chaque moyen de rappel 3 comprend une partie active 3a montée dans la patte de serrage 2 associée et une partie d'extrémité de liaison 3b reliée au corps principal 2. On entend, de manière connue, par partie active 3a du moyen de rappel 3, une partie apte à se déformer élastiquement par compression ou extension, par opposition aux autres parties aptes et destinées être utilisées pour des liaisons ou des appuis.

On peut voir également que chaque moyen de rappel 3 peut se terminer, à l'opposé de sa partie d'extrémité de liaison 3b, par une partie d'extrémité de maintien 3c permettant sa fixation ou son maintien dans la patte de serrage 2 qui peut comprendre à cet effet au moins un logement 2e. Plus particulièrement, la partie active 3a peut alors se prolonger, d'une part, par la partie d'extrémité de liaison 3b et, d'autre part, par sa partie d'extrémité de maintien 3c.

Comme on peut le voir également sur les figures 1, 2, 3, 4, 5, 6, 7 et 9 selon l'invention, le corps principal 1 comprend au moins deux bords d'appui et de glissement 1b, de préférence de forme arrondie, associés chacun à l'un des moyens de rappel 3. La partie d'extrémité de liaison 3b de chaque moyen de rappel 3 est reliée au corps principal 1 en étant en appui, par contact avec glissement, sur le bord d'appui et de glissement 1b associé de sorte que, lors du déplacement de la patte de serrage 2 entre sa position abaissée ou repliée et sa position déployée ou relevée ou inversement, chaque partie d'extrémité de liaison 3b glisse sur le bord d'appui et de glissement 1b associée en pivotant autour de ce dernier. De préférence, chaque bord d'appui et de glissement 1b peut s'étendre sensiblement perpendiculairement à l'axe longitudinal X1.

De préférence, chaque bord d'appui et de glissement 1b est situé à proximité de l'axe de pivotement 2c de la patte de serrage 2 supportant le moyen de rappel 3 auquel est associé ledit bord d'appui 1b. Cette caractéristique permet d'optimiser les effets de serrage et d'effort décrits ci-après.

D'autre part, dans une forme préférentielle, chaque bord d'appui et de glissement 1b du corps principal 1 est associé à une cavité 1c pratiquée dans le corps principal 1 à un niveau situé entre ledit bord d'appui et de glissement 1b et la face d'appui 1a de sorte à permettre à la partie d'extrémité de liaison 3b de chaque moyen de rappel 3 de venir s'insérer dans la cavité 1c associée lors de son glissement sur le bord d'appui et de glissement 1b associé et son pivotement autour de ce dernier.

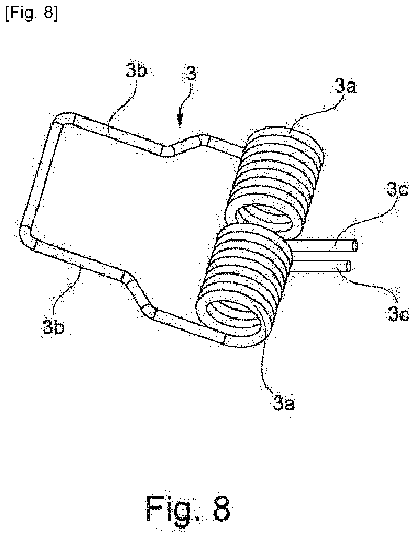

Dans une forme de réalisation préférentielle de chaque moyen de rappel 3 associé à une patte de serrage 2, chaque moyen de rappel 3 consiste en au moins un ressort 3 hélicoïdal de torsion (figures 1, 2, 3, 4, 5, 6, 7, 8, 9 et 10). Chaque moyen de rappel 3 peut également consister, dans une forme non représentée sur les figures annexées, en un ressort 3 hélicoïdal de compression ou de traction.

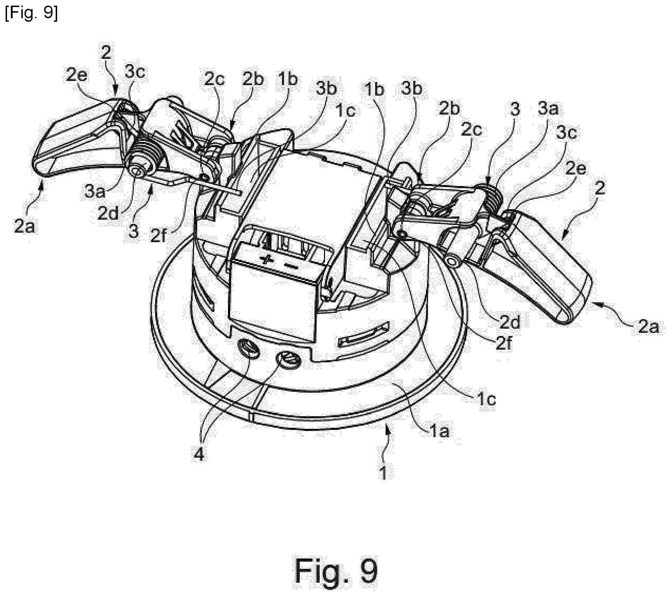

Chaque ressort 3 hélicoïdal de torsion comprend au moins un enroulement 3a hélicoïdal formant la partie active 3a et s'étendant sensiblement parallèlement à l'axe de pivotement 2c de la patte de serrage 2 associée audit moyen de rappel 3. Si on se réfère aux figures 1, 2, 3, 4, 5, 6, 7 et 8, on peut voir que chaque ressort 3 hélicoïdal de torsion peut comprendre, préférentiellement, deux enroulements 3a hélicoïdaux. De préférence, les deux enroulements 3a hélicoïdaux peuvent s'étendre côté à côte sensiblement sur le même axe. De préférence, les deux enroulements 3a hélicoïdaux peuvent être disposés de part et d'autre de l'axe longitudinal de la patte de serrage 2. Si on se réfère aux figures 9 et 10, on peut voir que dans une autre forme de réalisation, chaque ressort 3 hélicoïdal de torsion peut comprendre un seul enroulement 3a hélicoïdal. On peut voir également que la partie d'extrémité de liaison 3b, dans le cas où le ressort 3 hélicoïdal de torsion comprend un seul enroulement 3a hélicoïdal (figures 9 et 10), peut être formée par une extrémité de liaison 3b reliée audit enroulement 3a hélicoïdal ou, dans le cas où le ressort 3 hélicoïdal de torsion comprend deux enroulements 3a hélicoïdaux (figures 1, 2, 3, 4, 5, 6, 7, 8), peut être formée par deux extrémités de liaison 3b, de préférence reliées entre elles, reliées chacune à l'un des enroulements 3a hélicoïdaux.

Chaque ressort 3 hélicoïdal de torsion peut se terminer, à son extrémité opposée à sa partie d'extrémité de liaison 3b, par au moins une extrémité de maintien 3e permettant sa fixation ou son maintien dans la patte de serrage 2 qui peut comprendre à cet effet au moins un logement 2e apte à recevoir la ou au moins l'une desdites extrémités de maintien 3e. Plus particulièrement, dans le cas d'un ressort 3 hélicoïdal de torsion comprenant plusieurs enroulements 3a hélicoïdaux, par exemple deux enroulements 3a hélicoïdaux (figures 1, 2, 3, 4, 5, 6, 7, 8), chaque ressort 3 hélicoïdal de torsion peut comprendre plusieurs extrémités de maintien 3c, par exemple deux extrémités de maintien 3c reliées chacune à l'un des enroulements 3a hélicoïdaux. Dans le cas d'un ressort 3 hélicoïdal de torsion comprenant un seul enroulement 3a (figures 9 et 10), celui-ci peut comprendre une seule extrémité de maintien 3c reliée à l'enroulement 3a hélicoïdal.

On comprend que chaque enroulement 3a hélicoïdal se prolonge à l'une de ses extrémités par une extrémité de liaison 3b et à son autre extrémité par une extrémité de maintien 3c. On comprend également que la partie d'extrémité de liaison 3b de chaque ressort 3 hélicoïdal de torsion peut être formée par ou à partir d'une une ou plusieurs extrémités de liaison 3b.

La partie d'extrémité de liaison 3b peut présenter une forme de U. Cette forme peut être réalisée, comme on peut le voir sur les figures (figures 1, 2, 3, 4, 5, 6, 7, 8), par les deux extrémités de liaison 3b reliées entre elles par une branche de liaison perpendiculaire à ces dernières, ceci dans le cas d'un ressort 3 hélicoïdal de torsion comprenant deux enroulements 3a hélicoïdaux.

Dans une forme de réalisation préférentielle du montage de chaque ressort 3 hélicoïdal de torsion 3 supporté par la patte de serrage 2 associée, chaque enroulement 3a hélicoïdal est monté autour d'un mandrin 2d (figures 1, 2, 3, 4, 5, 6, 7, 9 et 11), ou dans une cavité cylindrique, permettant le maintien de la partie active 3a du ressort 3 (non représentée sur les figures annexées), intégré(e) dans la patte de serrage 2 et s'étendant sensiblement parallèlement à l'axe de pivotement 2c de la patte de serrage 2 associée audit ressort 3.

Dans le cas représenté sur les figures 1, 2, 3, 4, 5, 6, 7 et 8 où chaque ressort 3 hélicoïdal de torsion comprend deux enroulements 3a hélicoïdaux s'étendant côté à côte sensiblement sur le même axe, chaque patte de serrage 2 peut comporter un mandrin 2d ou une cavité cylindrique commun(e) aux deux ressorts 3 ou deux mandrins ou cavités cylindriques s'étendant côte à côte sur le même axe, de préférence de part et d'autre de l'axe de la patte de serrage 2.

Dans le cas représenté sur les figures 9 et 10 où chaque ressort 3 hélicoïdal de torsion comprend un seul enroulement 3a hélicoïdal, ce dernier peut être disposé d'un ou côté ou de l'autre de l'axe de la patte de serrage 2.

De manière à réduire les coûts de fabrication, chaque patte de serrage 2 peut comprendre au moins un mandrin 2d ou une cavité cylindrique permettant le montage d'un ressort 3 hélicoïdal avec deux enroulements 3a hélicoïdaux ou avec un seul enroulement 3a hélicoïdal.

De préférence, comme on peut le voir sur les figures 1, 2, 3, 4, 5, 6, 7, 9 et 11 la partie active 3a, le cas échéant le mandrin 2d ou la cavité cylindrique, est situé(e) sensiblement dans la partie centrale ou médiane de la patte de serrage 2 associée entre son extrémité libre 2a et son extrémité de liaison 2b ou entre ladite partie centrale ou médiane et l'extrémité de liaison 2b. Cette position de la partie active 3a dans la patte de serrage 2 permet d'optimiser les effets de serrage et d'effort décrits ci-après.

Si l'on considère plus particulièrement la caractéristique relative aux bords d'appui et de glissement 1b et, le cas échéant, les caractéristiques relatives à la proximité de l'axe de pivotement 2c et/ou au positionnement central ou médian de la partie active 3a du moyen de rappel 3, celles-ci ont pour effet/avantage d'obtenir, ou de favoriser l'obtention de, à l'état encastré de l'appareil électrique encastrable dans une paroi P, un effort de serrage de la paroi P, entre les pattes de serrage 2 de l'appareil électrique encastrable et sa face d'appui 1a, quasiment constant ou identique, quel que soit l'épaisseur de ladite paroi P dans la plage d'épaisseur classique ou standard (de l'ordre de 5mm à 30mm) d'une telle paroi P. Elles permettent également d'obtenir un effort le plus faible possible lors du maintien des pattes de serrage 2 en position relevée ou déployée, c'est-à-dire une force de retenue des pattes de serrage 2 très faible pour l'utilisateur. On comprend que la combinaison de l'ensemble de ces caractéristiques permet d'optimiser l'obtention de tels effets/avantages.

De préférence, l'extrémité libre 2a de chaque patte de serrage 2 est réalisée, au moins en surface, à partir d'un matériau à faible coefficient de frottement (ou de friction). Cette caractéristique permet de favoriser le glissement de l'extrémité libre 2a de chaque patte de serrage 2 sur la face interne P2 de la paroi P, notamment pour permettre ou favoriser la rotation de l'appareil électrique autour de son axe longitudinal X1 à l'état encastré en vue de réaliser le réglage ou la maintenance de l'appareil ou son positionnement angulaire.

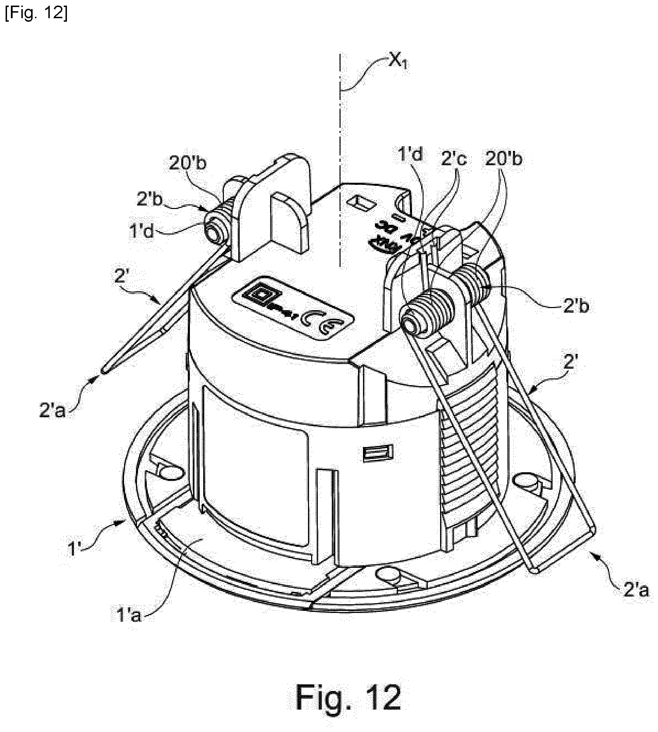

De manière connue, l'appareil électrique encastrable selon la présente invention peut comprendre des moyens de réglages 4, par exemple, du type potentiomètres, permettant de régler, par exemple, la temporisation ou le seuil de déclenchement. Ces moyens de réglage 4 peuvent être accessibles sur la face latérale externe du corps principal 1 et nécessitent, à l'état encastré de l'appareil, de sortir légèrement ledit appareil du trou P3 de la paroi P, et éventuellement, de faire une rotation de l'appareil autour de son axe longitudinal X, pour permettre à l'utilisateur d'être en regard desdits moyens de réglage 4. Grâce à la présente invention, une telle rotation de l'appareil est rendue possible ou favorisée sans accrochage ou blocage sur la paroi P ou en limitant ces derniers, contrairement à un appareil électrique encastrable de l'art antérieur tel que, par exemple, celui représenté sur la figure 12 et décrit par la suite.

De préférence, les pattes de serrage 2 sont réalisées à partir d'une matière plastique. Cette caractéristique a pour effet ou avantage de permettre de réaliser la pièce avec des formes complexes pour obtenir des surfaces de contact étendues ou élargies au niveau des pattes de serrage 2, plus particulièrement de leurs extrémités libres 2a et/ou pour pouvoir mieux configurer chaque patte de serrage 2 afin de recevoir le cas échéant la partie active 3a du moyen de rappel 3 et/ou pour obtenir un faible coefficient de friction (ou de frottement) des surfaces de contact ou d'appui tels que les surfaces externes des extrémités de liaison 2b destinées à venir en appui sur la face d'appui 1a de l'appareil.

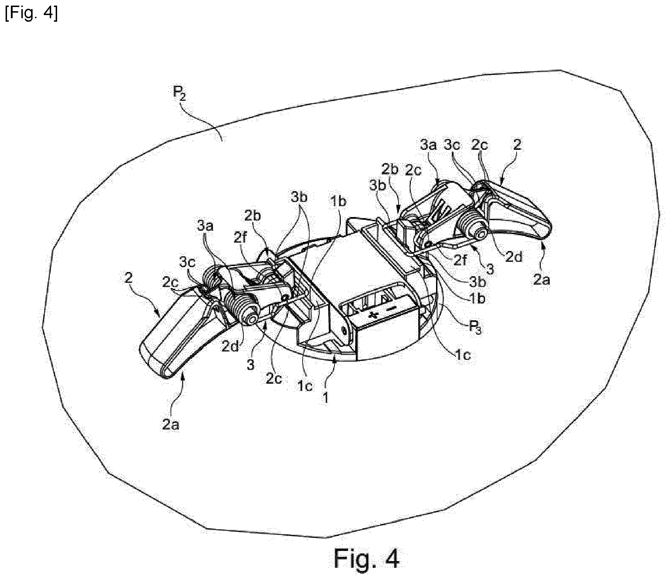

Dans une forme préférentielle du corps principal 1, comme on peut le voir notamment sur les figures 4, 6, 7 et 9, celui-ci présente une forme globalement cylindrique ou tronconique. En outre, les deux pattes de serrage 2 peuvent être préférentiellement diamétralement opposées de part et d'autre de l'axe longitudinal X1.

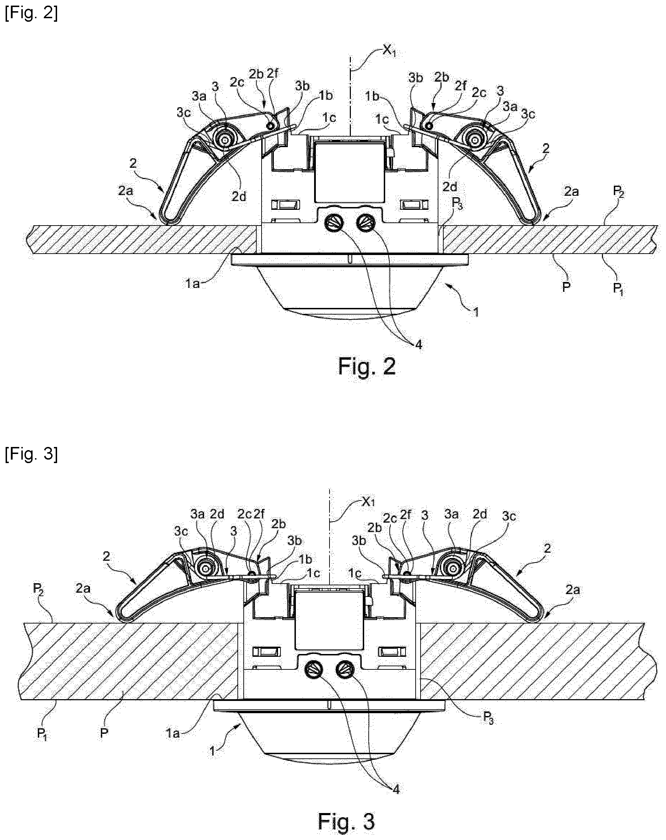

Si on se réfère aux figures 2 et 3 on peut voir un appareil électrique encastrable selon la présente invention à l'état encastré dans un trou P3 ménagé à cet effet dans une paroi P mince (figure 2) ou une paroir P épaisse (figure 3), c'est-à-dire de plus grande épaisseur que celle de la paroi P mince. Les pattes de serrage 2 sont abaissées ou repliées, sous l'effet de la force de rappel exercée par chaque moyen de rappel 3 associé, vers la face d'appui 1a du corps principal 1 en venant en appui sous pression, par leur extrémité libre 2a, sur la face interne P2 de la paroi P. Un tel appareil électrique encastrable selon la présente invention permet d'obtenir un effort de serrage ou de maintien dans la paroi P mince identique ou quasiment identique à celui obtenu dans la paroi P épaisse ou de plus grande épaisseur.

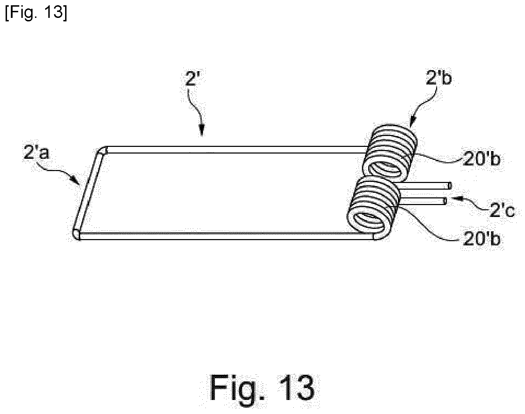

Si l'on se réfère aux figures 12 et 13, on peut voir que les deux pattes de serrage 2' d'un appareil électrique encastrable de l'art antérieur ne sont pas distinctes des moyens de rappel mais sont constituées chacune par une partie d'un moyen de rappel 2'b en ne formant avec ce dernier qu'une seule pièce. Plus particulièrement, on peut voir que chaque moyen de rappel 2'b consiste en ressort 2'b hélicoïdal de torsion formé à partir d'une tige pliée de sorte à former, d'une part, deux enroulements 20'b hélicoïdaux s'étendant sensiblement sur le même axe perpendiculairement à l'axe longitudinal X1 du corps principal 1' de l'appareil et, d'autre part, une partie en U formant l'une des deux pattes de serrage 2' et se terminant par une extrémité libre 2'a venant en appui avec pression sur la face interne P2 d'une paroi P à l'état encastré dudit appareil dans cette dernière. Ces enroulements 20'b hélicoïdaux sont montés sur le corps principal 1' en étant fixés par une extrémité de maintien 2'c et en étant enfilés sur un mandrin 1'd fixé sur le corps principal 1' perpendiculairement à l'axe longitudinal X1. Chaque enroulement 20'b hélicoïdal forme, outre la partie active du ressort 2'b, une articulation sur le corps principal 1' permettant un pivotement de la patte de serrage 2' autour de l'axe d'enroulement. Le corps principal 1' comprend une face d'appui 1'a apte et destinée à venir en appui de serrage contre la face externe P1 d'une paroi P.

Un tel appareil de l'art antérieur, du fait du pivotement de chaque patte de serrage 2' autour de l'axe d'enroulement et de la même entité intégrant à la fois la patte de serrage 2 et le moyen de rappel 2'b, entraîne une variation de l'effort de serrage suivant les différentes épaisseurs de paroi, avec un effort de retenue plus important dans le cas d'une paroi épaisse que dans le cas d'une paroi mince ou de plus faible épaisseur. Par ailleurs la réalisation de chaque extrémité libre 2'a à partir d'une tige métallique pliée, s'accrochant à la face interne P2 de la paroi P, ne permet pas de favoriser la rotation de l'appareil à l'état encastré, voire peut empêcher ladite rotation. En outre de telles pattes de serrage 2' peuvent détériorer le trou P3 de la paroi P lors de l'encastrement ou du retrait de l'appareil dudit trou P3 et entraîner des détériorations plus ou moins importantes de la paroi P. Enfin, lors du maintien, par les doigts de l'utilisateur, des pattes de serrage 2' en position relevée ou déployée pour permettre l'insertion de l'appareil dans le trou P3, la force de rappel exercée sur les pattes de serrage 2' est beaucoup plus grande qu'en position abaissée ou repliée desdites pattes de serrage, ce qui rend difficile le maintien dans cette position relevée ou déployée ou dans une position intermédiaire lors du passage vers cette position relevée ou déployée ou inversement et peut entraîner des risques de blessures pour l'utilisateur.

Au contraire un appareil électrique encastrable selon la présente invention, dont, plus particulièrement, les moyens de rappel 3 sont distincts des pattes de serrage 2 articulées en pivotement sur le corps principal 1 et positionnés de manière spécifique par rapport auxdites pattes de serrage 2 et au corps principal 1, plus particulièrement en étant supportés par les pattes de serrage 2, notamment avec leur partie active 3a montée dans ces dernières, permet d'obtenir :
- un effort de serrage ou de maintien quasiment constant ou identique quel que soit l'épaisseur de la paroi P, dans la plage d'épaisseur (notamment entre 5 et 30 mm) des parois connues telles que, par exemple, des parois connues du type paroi d'habillage ou paroi de faux-plafond ou paroi analogue,
- un effort ou une force de retenue des pattes de serrage très faible lors de leur maintien en position relevée ou déployée, facilitant ainsi l'encastrement de l'appareil dans la paroi et réduisant ou supprimant les risques de blessure de l'utilisateur,
- une surface de contact plus grande par l'utilisation de pattes de serrage 2 pouvant présenter des surfaces de contact au niveau de leurs extrémités libres 2a plus grande que celle des pattes de serrage 2' de l'art antérieur réalisées à partir d'une tige pliée,
- un produit moins agressif pour l'utilisateur,
- une mise en oeuvre simplifiée lors du montage dans la paroi ou du réglage de l'appareil électrique,
- une réduction ou suppression des détériorations des faux plafonds,
- une rotation ou une rotation facilitée de l'appareil autour de son axe longitudinal X1 à l'état encastré.

## Revendications

1. Appareil électrique encastrable configuré pour pouvoir être encastré dans un trou (P3) ménagé à travers une paroi (P) présentant deux faces opposées, une face externe (P1) et une face interne (P2), ledit appareil comprenant un corps principal (1) s'étendant le long d'un axe longitudinal (X1) et étant muni d'une face d'appui (1a) externe apte et destinée à venir en appui contre ladite face externe (P1) à l'état encastré de l'appareil dans ledit trou (P3), au moins deux pattes de serrage (2) comportant chacune une extrémité libre (2a) et une extrémité de liaison (2b) reliée audit corps principal (1) de sorte à permettre le déplacement de chaque patte de serrage (2) à l'extérieur dudit corps principal (1) entre une position relevée permettant l'insertion de l'appareil dans ledit trou (P3) et une position abaissée dans laquelle chaque extrémité libre (2a) est apte et destinée à venir en appui avec pression, sous l'effet d'une force de rappel exercée sur lesdites pattes de serrage, sur ladite face interne (P2) à l'état encastré de l'appareil pour maintenir ce dernier par serrage de la paroi (P) entre ladite face d'appui (1a) et lesdites extrémités libres (2a) et des moyens de rappel (3) exerçant ladite force de rappel tendant à ramener ces dernières vers leur position abaissée, les moyens de rappel (3) étant distincts des pattes de serrage (2) et chaque patte de serrage (2) étant associée à l'un des moyens de rappel (3) et articulée en pivotement à son extrémité de liaison (2b) sur ledit corps principal (2) autour d'un axe de pivotement (2c) sensiblement perpendiculaire à l'axe longitudinal (X1), chaque moyen de rappel (3) étant relié à la patte de serrage (2) associée et au corps principal (1) chaque moyen de rappel (3) étant supporté par la patte de serrage (2) associée et comprenant une partie active (3a) montée dans la patte de serrage (2) associée et une partie d'extrémité de liaison (3b) reliée au corps principal (2), **caractérisé en ce que** le corps principal (1) comprend au moins deux bords d'appui et de glissement (1b), de préférence de forme arrondie, associés chacun à l'un des moyens de rappel (3) et **en ce que** la partie d'extrémité de liaison (3b) de chaque moyen de rappel (3) est reliée au corps principal (1) en étant en appui, par contact avec glissement, sur le bord d'appui et de glissement (1b) associé de sorte que, lors du déplacement de la patte de serrage (2) entre sa position abaissée et sa position relevée ou inversement, chaque partie d'extrémité de liaison (3b) glisse sur le bord d'appui et de glissement (1b) associé en pivotant autour de ce dernier.

2. Appareil électrique encastrable, selon la revendication 1, **caractérisé en ce que** la partie active (3a) est située sensiblement dans la partie centrale ou médiane de la patte de serrage (2) associée entre son extrémité libre (2a) et son extrémité de liaison (2b) ou entre ladite partie centrale ou médiane et ladite extrémité de liaison (2b).

3. Appareil électrique encastrable, selon la revendication 1 ou 2, **caractérisé en ce que** chaque bord d'appui et de glissement (1b) est situé à proximité de l'axe de pivotement (2c) de la patte de serrage (2) supportant le moyen de rappel (3) auquel est associé ledit bord d'appui (1b).

4. Appareil électrique encastrable, selon l'une quelconque des revendications 1 à 3, **caractérisé en ce que** chaque bord d'appui et de glissement (1b) du corps principal (1) est associé à une cavité (1c) pratiquée dans le corps principal (1) à un niveau situé entre ledit bord d'appui et de glissement (1b) et la face d'appui (1a) de sorte à permettre à la partie d'extrémité de liaison (3b) de chaque moyen de rappel (3) de venir s'insérer dans la cavité (1c) associée lors de son glissement sur le bord d'appui et de glissement (1b) associé et son pivotement autour de ce dernier.

5. Appareil électrique encastrable, selon l'une quelconque des revendications 1 à 4, **caractérisé en ce que** chaque moyen de rappel (3) associé à une patte de serrage (2) consiste en au moins un ressort (3) hélicoïdal de torsion ou de compression ou de traction.

6. Appareil électrique encastrable, selon la revendication 5, **caractérisé en ce que** chaque ressort (3) hélicoïdal de torsion comprend au moins un enroulement hélicoïdal formant la partie active (3a) et s'étendant sensiblement parallèlement à l'axe de pivotement (2c) de la patte de serrage (2) associée audit moyen de rappel (3).

7. Appareil électrique encastrable, selon la revendication 6, **caractérisé en ce que** chaque enroulement hélicoïdal (3a) est monté autour d'un mandrin (2d), ou dans une cavité cylindrique, permettant le maintien de la partie active du ressort, intégré(e) dans la patte de serrage (2) et s'étendant sensiblement parallèlement à l'axe de pivotement (4) de la patte de serrage (2) associée audit ressort (3).

8. Appareil électrique encastrable, selon l'une quelconque des revendications 1 à 7, **caractérisé en ce que** l'extrémité libre (2a) de chaque patte de serrage (2) est réalisée, au moins en surface, à partir d'un matériau à faible coefficient de friction ou de frottement.

9. Appareil électrique encastrable, selon l'une quelconque des revendications 1 à 8, **caractérisé en ce que** les pattes de serrage (2) sont réalisées à partir d'une matière plastique.

10. Appareil électrique encastrable, selon l'une quelconque des revendications 1 à 9, **caractérisé en ce que** le corps principal (1) présente une forme globalement cylindrique ou tronconique et/ou les deux pattes de serrage (2) sont diamétralement opposées de part et d'autre de l'axe longitudinal (X1). 1

## Patentansprüche

1. Elektrisches Einbaugerät, welches dafür ausgelegt ist, in ein Loch (P3) eingepasst werden zu können, das durch eine Wand (P) hindurch ausgebildet ist, die zwei gegenüberliegende Seiten aufweist, eine Außenseite (P1) und eine Innenseite (P2), wobei das Gerät umfasst: einen Hauptkörper (1), der sich entlang einer Längsachse (X1) erstreckt und mit einer äußeren Anlageseite (1a) versehen ist, die geeignet und dazu bestimmt ist, im in das Loch (P3) eingepassten Zustand des Gerätes an der Außenseite (P1) zur Anlage zu kommen, mindestens zwei Klemmlaschen (2), die jeweils ein freies Ende (2a) und ein mit dem Hauptkörper (1) verbundenes Verbindungsende (2b) aufweisen, um so die Bewegung jeder Klemmlasche (2) außerhalb des Hauptkörpers (1) zwischen einer angehobenen Position, die das Einsetzen des Gerätes in des Loch (P3) ermöglicht, und einer abgesenkten Position, in der jedes freie Ende (2a) geeignet und dazu bestimmt ist, mit Druck, unter der Einwirkung einer auf die Klemmlaschen ausgeübten Rückstellkraft, an der Innenseite (P2) im eingepassten Zustand des Gerätes zur Anlage zu kommen, um dieses Letztere durch Klemmung der Wand (P) zwischen der Anlageseite (1a) und den freien Enden (2a) zu halten, zu ermöglichen, und Rückstellmittel (3), welche die Rückstellkraft ausüben, die bestrebt ist, diese Letzteren in ihre abgesenkte Position zurückzubewegen, wobei die Rückstellmittel (3) von den Klemmlaschen (2) verschieden sind und jede Klemmlasche (2) einem der Rückstellmittel (3) zugeordnet ist und an ihrem Verbindungsende (2b) am Hauptkörper (1) um eine zur Längsachse (X1) im Wesentlichen senkrechte Schwenkachse (2c) schwenkbar angelenkt ist, wobei jedes Rückstellmittel (3) mit der zugeordneten Klemmlasche (2) und mit dem Hauptkörper (1) verbunden ist, wobei jedes Rückstellmittel (3) von der zugeordneten Klemmlasche (2) gestützt wird und einen aktiven Teil (3a), der in der zugeordneten Klemmlasche (2) angebracht ist, und einen Verbindungsendteil (3b), der mit dem Hauptkörper (1) verbunden ist, umfasst, **dadurch gekennzeichnet, dass** der Hauptkörper (1) mindestens zwei Anlage- und Gleitränder (1b) umfasst, vorzugsweise von gerundeter Form, die jeweils einem der Rückstellmittel (3) zugeordnet sind, und dadurch, dass der Verbindungsendteil (3b) jedes Rückstellmittels (3) mit dem Hauptkörper (1) verbunden ist, indem er in gleitendem Kontakt am zugeordneten Anlage- und Gleitrand (1b) anliegt, so dass während der Bewegung der Klemmlasche (2) zwischen ihrer abgesenkten Position und ihrer angehobenen Position oder umgekehrt jeder Verbindungsendteil (3b) auf dem zugeordneten Anlage- und Gleitrand (1b) gleitet und dabei um diesen Letzteren schwenkt.

2. Elektrisches Einbaugerät nach Anspruch 1, **dadurch gekennzeichnet, dass** sich der aktive Teil (3a) im Wesentlichen im zentralen oder mittleren Teil der zugeordneten Klemmlasche (2) zwischen ihrem freien Ende (2a) und ihrem Verbindungsende (2b) oder zwischen dem zentralen oder mittleren Teil und dem Verbindungsende (2b) befindet.

3. Elektrisches Einbaugerät nach Anspruch 1 oder 2, **dadurch gekennzeichnet, dass** sich jeder Anlage- und Gleitrand (1b) in der Nähe der Schwenkachse (2c) der Klemmlasche (2) befindet, die das Rückstellmittel (3) stützt, dem der Anlagerand (1b) zugeordnet ist.

4. Elektrisches Einbaugerät nach einem der Ansprüche 1 bis 3, **dadurch gekennzeichnet, dass** jeder Anlage- und Gleitrand (1b) des Hauptkörpers (1) einer Vertiefung (1c) zugeordnet ist, die im Hauptkörper (1) auf einer Höhe ausgebildet ist, die sich zwischen dem Anlage- und Gleitrand (1b) und der Anlageseite (1a) befindet, um zu ermöglichen, dass sich der Verbindungsendteil (3b) jedes Rückstellmittels (3) während seines Gleitens auf dem zugeordneten Anlage- und Gleitrand (1b) und seiner Schwenkung um diesen Letzteren in die zugeordnete Vertiefung (1c) hineinbewegt.

5. Elektrisches Einbaugerät nach einem der Ansprüche 1 bis 4, **dadurch gekennzeichnet, dass** jedes Rückstellmittel (3), das einer Klemmlasche (2) zugeordnet ist, aus mindestens einer Torsions- oder Druck- oder Zugschraubenfeder (3) besteht.

6. Elektrisches Einbaugerät nach Anspruch 5, **dadurch gekennzeichnet, dass** jede Torsionsschraubenfeder (3) mindestens eine schraubenförmige Wicklung umfasst, die den aktiven Teil (3a) bildet und sich im Wesentlichen parallel zur Schwenkachse (2c) der Klemmlasche (2) erstreckt, die dem Rückstellmittel (3) zugeordnet ist.

7. Elektrisches Einbaugerät nach Anspruch 6, **dadurch gekennzeichnet, dass** jede schraubenförmige Wicklung (3a) um einen Dorn (2d) herum oder in einem oder in einer zylindrischen Vertiefung angebracht ist, der bzw. die das Halten des aktiven Teils der Feder ermöglicht, in die Klemmlasche (2) integriert ist und sich im Wesentlichen parallel zur Schwenkachse (4) der Klemmlasche (2) erstreckt, die der Feder (3) zugeordnet ist.

8. Elektrisches Einbaugerät nach einem der Ansprüche 1 bis 7, **dadurch gekennzeichnet, dass** das freie Ende (2a) jeder Klemmlasche (2) wenigstens an der Oberfläche aus einem Material mit einem niedrigen Friktions- oder Reibungskoeffizienten hergestellt ist.

9. Elektrisches Einbaugerät nach einem der Ansprüche 1 bis 8, **dadurch gekennzeichnet, dass** die Klemmlaschen (2) aus einem Kunststoff hergestellt sind.

10. Elektrisches Einbaugerät nach einem der Ansprüche 1 bis 9, **dadurch gekennzeichnet, dass** der Hauptkörper (1) eine im Wesentlichen zylindrische oder kegelstumpfförmige Form aufweist und/oder die Klemmlaschen (2) diametral entgegengesetzt beiderseits der Längsachse (X1) angeordnet sind.

## Claims

1. Recessable electric apparatus designed to be able to be recessed in a hole (P3) formed through a wall (P) having two opposing faces, an outer face (P1) and an inner face (P2), said apparatus comprising a main body (1) extending along a longitudinal axis (X1) and being provided with an outer bearing face (1a) that is able and intended to bear against said outer face (P1) when the apparatus is in the recessed state in said hole (P3), at least two clamping legs (2) each including a free end (2a) and a connecting end (2b) connected to said main body (1) so as to enable each clamping leg (2) to move outside said main body (1) between a raised position enabling the apparatus to be inserted into said hole (P3) and a lowered position in which each free end (2a) is able and intended to bear with pressure, under the effect of a return force exerted on said clamping legs, against said inner face (P2) when the apparatus is in the recessed state to hold the latter by clamping the wall (P) between said bearing face (1a) and said free ends (2a) and return means (3) exerting said return force tending to return the latter to the lowered position thereof,
the return means (3) being distinct from the clamping legs (2) and each clamping leg (2) being associated with one of the return means (3) and articulated pivotingly at the connecting end (2b) thereof on said main body (2) about a pivot axis (2c) substantially perpendicular to the longitudinal axis (X1), each return means (3) being connected to the associated clamping leg (2) and to the main body (1), each return means (3) being supported by the associated clamping leg (2) and comprising an active part (3a) mounted in the associated clamping leg (2) and an end connecting part (3b) connected to the main body (2), **characterized in that** the main body (1) comprises at least two bearing and sliding edges (1b), preferably having a rounded shape, each associated with one of the return means (3) and **in that** the end connecting part (3b) of each return means (3) is connected to the main body (1), bearing, by sliding contact, on the associated bearing and sliding edge (1b) so that, when the clamping leg (2) is moving between the lowered position thereof and the raised position thereof or vice versa, each end connecting part (3b) slides on the associated bearing and sliding edge (1b), pivoting about the latter.

2. Recessable electric apparatus according to Claim 1, **characterized in that** the active part (3a) is located substantially in the central or mid portion of the associated clamping leg (2) between the free end (2a) thereof and the connecting end (2b) thereof or between said central or mid portion and said connecting end (2b).

3. Recessable electric apparatus according to Claim 1 or 2, **characterized in that** each bearing and sliding edge (1b) is located near the pivot axis (2c) of the clamping leg (2) supporting the return means (3) associated with said bearing edge (1b).

4. Recessable electric apparatus according to any one of Claims 1 to 3, **characterized in that** each bearing and sliding edge (1b) of the main body (1) is associated with a cavity (1c) formed in the main body (1) at a point located between said bearing and sliding edge (1b) and the bearing face (1a) so as to enable the end connecting part (3b) of each return means (3) to be inserted in the associated cavity (1c) when sliding on the associated bearing and sliding edge (1b) and pivoting about the latter.

5. Recessable electric apparatus according to any one of Claims 1 to 4, **characterized in that** each return means (3) associated with a clamping leg (2) consists of at least one helical torsion or compression or tension spring (3).

6. Recessable electric apparatus according to Claim 5, **characterized in that** each helical torsion spring (3) comprises at least one helical winding forming the active part (3a) and extending substantially parallel to the pivot axis (2c) of the clamping leg (2) associated with said return means (3).

7. Recessable electric apparatus according to Claim 6, **characterized in that** each helical winding (3a) is mounted about a mandrel (2d) or in a cylindrical cavity, in order to hold the active part of the spring, which is incorporated into the clamping leg (2) and extends substantially parallel to the pivot axis (4) of the clamping leg (2) associated with said spring (3).

8. Recessable electric apparatus according to any one of Claims 1 to 7, **characterized in that** at least the surface of the free end (2a) of each clamping leg (2) is made from a material having a low friction coefficient.

9. Recessable electric apparatus according to any one of Claims 1 to 8, **characterized in that** the clamping legs (2) are made from a plastic.

10. Recessable electric apparatus according to any one of Claims 1 to 9, **characterized in that** the main body (1) has an overall cylindrical or frustoconical shape and/or the two clamping legs (2) are diametrically opposed on each side of the longitudinal axis (X1).
